# EUROPEAN PATENT APPLICATION

(11) **EP 2 345 943 A1**
(43) Date of publication of application: **20.07.2011**
(21) Application number: 11150367.8
(22) Date of filing: 07.01.2011
(51) Int. Cl.: G05B 23/02

(54) **System and method for monitoring and controlling wind turbine blade deflection**

(30) Priority: 14.01.2010 US 687336
(71) Applicant: General Electric Company, Schenectady, NY 12345 (US)
(72) Inventor: Latorre, Carlos Eduardo, Greenville, SC 29615 (US); Converse, Thomas, Schenectady, NY 12345 (US); Brown, Michael Gregory, Greenville, SC 29615 (US); Landa, Bernard P., Greenville, SC 29615 (US); Fric, Thomas Frank, Greenville, SC 29615 (US); Dinjus, Thomas Ernst, Greenville, SC 29615 (US); Torbohm, Gert, 48499, Salzbergen (DE); Schuell, Nadine, 48499, Salzbergen (DE)
(74) Representative: Bedford, Grant Richard

(57) **Abstract**

A system is disclosed for monitoring and controlling the deflection of turbine blades (22) of a wind turbine (10). The system includes a passive position detecting apparatus (46) and a controller (36). The passive position detecting apparatus (46) may be configured to acquire and transmit data relating directly to a position of at least one of the turbine blades (22). The controller (36) may be configured to receive the data from the passive position detecting apparatus (46) and compare such data to a known position reference to determine turbine blade deflection.

## Description

The present subject matter relates generally to wind turbines and particularly to turbine blade deflection. More particularly, the present subject matter relates to a system and method for monitoring and controlling turbine blade deflection during operation of a wind turbine.

Wind power is considered one of the cleanest, most environmentally friendly energy sources presently available, and wind turbines have gained increased attention in this regard. A modem wind turbine typically includes a tower, generator, gearbox, nacelle, and one or more turbine blades. The turbine blades capture kinetic energy from wind using known foil principles and transmit the kinetic energy through rotational energy to turn a shaft coupling the rotor blades to a gearbox, or if a gearbox is not used, directly to the generator. The generator then converts the mechanical energy to electrical energy that may be deployed to a utility grid.

To ensure that wind power remains a viable energy source, efforts have been made to increase energy outputs by modifying the size and capacity of wind turbines. One such modification has been to increase the length of the turbine blades. However, as is generally known, the deflection of a turbine blade is a function of blade length, along with wind speed, turbine operating states and blade stiffness. Thus, longer turbine blades may be subject to increased deflection forces, particularly when a wind turbine is operating in high-speed wind conditions. These increased deflection forces not only produce fatigue on the turbine blades and other wind turbine components but may also increase the risk of the turbine blades striking the tower. A tower strike can significantly damage a turbine blade and the tower and, in some instances, can even bring down the entire wind turbine. Accordingly, a tower strike may result in considerable downtime to repair or replace damaged components.

Known wind turbine systems determine turbine blade deflection by utilizing external sensors, which are typically mounted on the turbine blades or on the tower. These sensors are designed to sense turbine blade operating conditions (e.g. blade strain, blade acceleration or blade velocity) to enable blade deflection to be inferred or calculated. However, maintaining the sensors can be very costly and calibrating such sensors can be quite complex and time consuming. Moreover, since the sensors must be calibrated frequently, there is a concern with regard to the reliability of data transmitted from the sensors over an extended period of time.

Accordingly, there is a need for a system and method for monitoring and controlling wind turbine blade deflection that provides reliable data without the excessive complexity and costs.

Various aspects and advantages of the present subject matter will be set forth in part in the following description, or may be clear from the description, or may be learned through practice of the invention.

In one aspect, the present subject matter provides a unique system for monitoring and controlling the deflection of turbine blades of a wind turbine. The system includes a passive position detecting apparatus and a controller. The passive position detecting apparatus may be configured to acquire and transmit data relating directly to a position of at least one of the turbine blades. The controller may be configured to receive the data from the passive position detecting apparatus and compare such data to a known position reference to determine turbine blade deflection.

In another aspect, the present subject matter provides a method for monitoring and controlling the deflection of turbine blades of a wind turbine. The method includes the steps of passively acquiring data relating directly to a position of at least one of the turbine blades, transmitting the data to a controller, comparing the data to a known position reference to determine turbine blade deflection and performing a corrective action when the turbine blade deflection exceeds a predetermined blade deflection threshold.

In a further aspect, the present subject matter provides a wind turbine including a tower, a nacelle mounted on top of the tower and a rotor coupled to the nacelle that comprises a hub and at least one turbine blade extending outwardly from the hub. Additionally, the wind turbine includes a passive position detecting apparatus and a controller, both of which may be configured as discussed above and described in greater detail below.

Various features, aspects and advantages of the present subject matter will become better understood with reference to the following description and appended claims. The accompanying drawings, which are incorporated in and constitute a part of this specification, illustrate embodiments of the present subject matter and, together with the description, serve to explain the principles of the present subject matter, in which:
Fig. 1 provides a perspective view of a wind turbine;
Fig. 2 provides a side view of a wind turbine in accordance with one embodiment of the present subject matter; and,
Fig. 3 provides a side view of a wind turbine in accordance with another embodiment of the present subject matter.

Reference now will be made in detail to embodiments of the present subject matter, one or more examples of which are illustrated in the drawings. Each example is provided by way of explanation, not limitation of the present subject matter. In fact, it will be apparent to those skilled in the art that various modifications and variations can be made in the present subject matter without departing from the scope or spirit of the present subject matter. For instance, features illustrated or described as part of one embodiment can be used with another embodiment to yield a still further embodiment. Thus, it is intended that the present subject matter covers such modifications and variations as come within the scope of the appended claims and their equivalents.

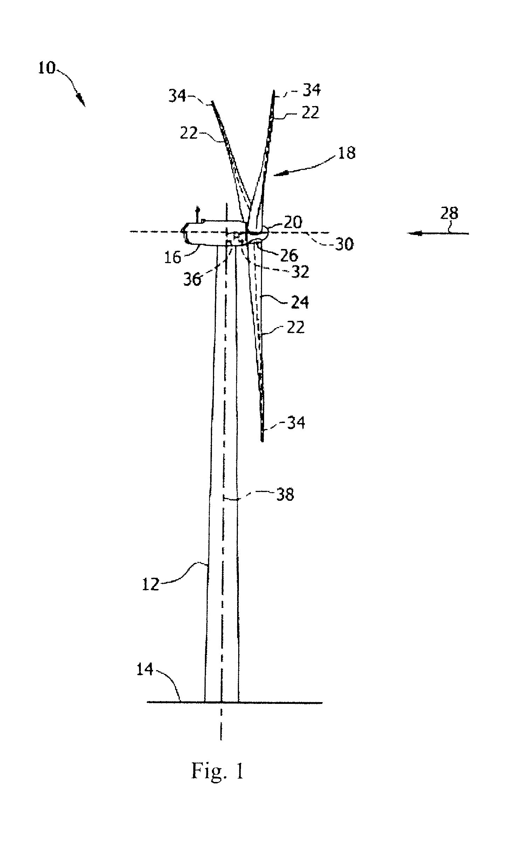

Figure 1 illustrates a perspective view of a wind turbine 10. As shown, the wind turbine 10 is a horizontal-axis wind turbine. However, it should be appreciated that the wind turbine 10 may be a vertical-axis wind turbine. In the illustrated embodiment, the wind turbine 10 includes a tower 12 that extends from a support system 14, a nacelle 16 mounted on the tower 12, and a rotor 18 that is coupled to the nacelle 16. The rotor 18 includes a rotatable hub 20 and at least one turbine blade 22 coupled to and extending outward from the hub 20. As shown, the rotor 18 includes three turbine blades 22. However, in an alternative embodiment, the rotor 18 may include more or less than three turbine blades 22. Additionally, in the illustrated embodiment, the tower 12 is fabricated from tubular steel to define a cavity (not illustrated) between the support system 14 and the nacelle 16. In an alternative embodiment, the tower 12 may be any suitable type of tower having any suitable height.

The turbine blades 22 may generally have any suitable length that enables the wind turbine 10 to function as described herein. For example, in one embodiment, the turbine blades 22 may have a length ranging from about 15 meters (m) to about 91 m. However, other non-limiting examples of blade lengths may include 10 m or less, 20 m, 37m or a length that is greater than 91 m. Additionally, the turbine blades 22 may be spaced about the hub 20 to facilitate rotating the rotor 18 to enable kinetic energy to be transferred from the wind into usable mechanical energy, and subsequently, electrical energy. Specifically, the hub 20 may be rotatably coupled to an electric generator (not illustrated) positioned within the nacelle 16 to permit electrical energy to be produced. Further, the turbine blades 22 may be mated to the hub 20 by coupling a blade root portion 24 to the hub 20 at a plurality of load transfer regions 26. Thus, any loads induced to the turbine blades 22 are transferred to the hub 20 via the load transfer regions 26.

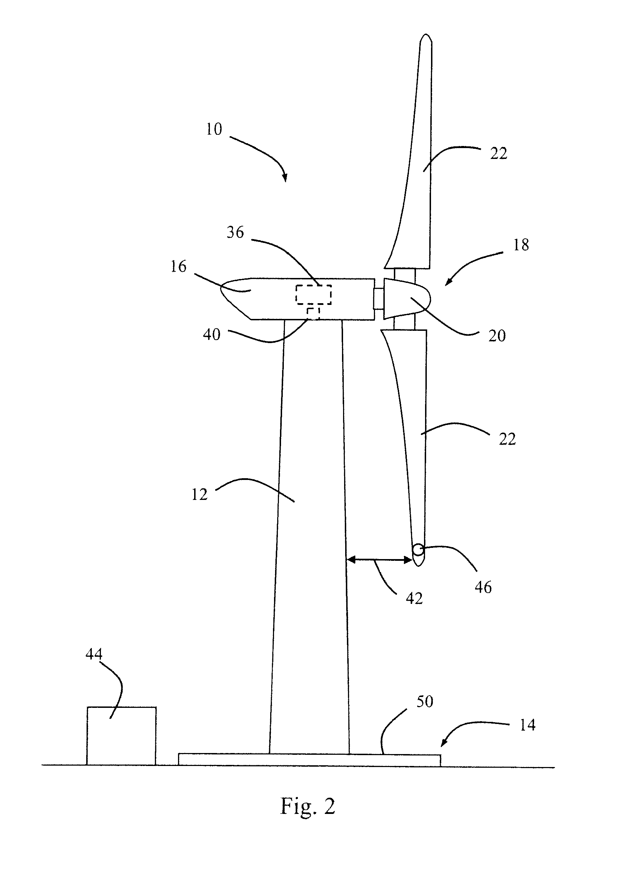

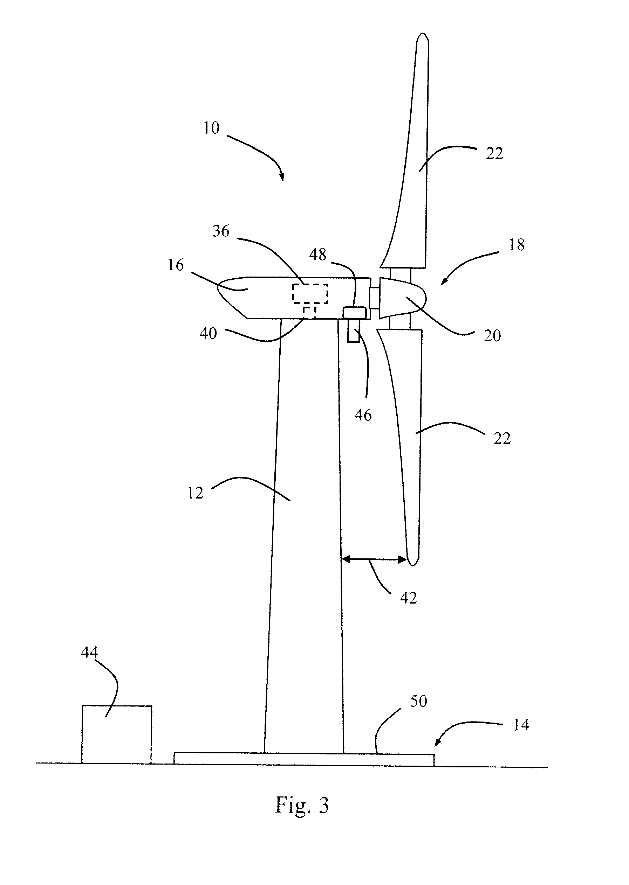

As shown in the illustrated embodiment, the wind turbine may also include a turbine control system or turbine controller 36 centralized within the nacelle 16. However, it should be appreciated that the controller 36 may be disposed at any location on or in the wind turbine 10, at any location on the support system 14 or generally at any other location. The controller 36 may be configured to control the various operating modes of the wind turbine 10 (e.g., start-up or shut-down sequences). Additionally, the controller 36 may be configured to control a pitch angle or blade pitch of each of the turbine blades 22 (i.e., an angle that determines a perspective of the turbine blades 22 with respect to the direction 28 of the wind) to control the load and power generated by the wind turbine 10 by adjusting an angular position of at least one turbine blade 22 relative to the wind. For instance, the controller 36 may control the blade pitch of the turbine blades 22, either individually or simultaneously, by controlling a pitch adjustment system 32. Pitch axes 34 for the turbine blades 22 are shown. Further, as the direction 28 of the wind changes, the controller 36 may be configured to control a yaw direction of the nacelle 16 about a yaw axis 38 to position the turbine blades 22 with respect to the direction 28 of the wind. For example, the controller 36 may control a yaw drive mechanism 40 (Figs. 2 and 3) of the nacelle 16 in order to rotate the nacelle 16 about the yaw axis 38.

During operation of the wind turbine 10, wind strikes the turbine blades 22 from a direction 28, which causes the rotor 18 to rotate about an axis of rotation 30. As the turbine blades 22 are rotated and subjected to centrifugal forces, the turbine blades 22 are also subjected to various forces and bending moments. As such, the turbine blades 22 may deflect from a neutral, or non-deflected, position to a deflected position. For example, the non-deflected blade clearance, distance 42 (Figs. 2 and 3), represents the distance between the turbine blades 22 and the tower 12 when the blades 22 are in a non-deflected position. However, forces and bending moments acting on the turbine blades 22 may cause the blades 22 to deflect towards the tower 12, reducing the overall blade clearance. As aerodynamic loads increase, excessive forces and bending moments can cause one or more of the turbine blades 22 to strike the tower 12 resulting in significant damage and downtime.

In accordance with one aspect of the present subject matter, Fig. 2 illustrates one embodiment of a system for monitoring and controlling the blade deflection of turbine blades 22 of a wind turbine 10. The system includes a passive position detecting apparatus 46 and a turbine controller 36. The passive position detecting apparatus 46 may be configured to acquire data relating directly to a position of at least one turbine blade 22 and transmit such data to the controller 36. The controller 36 may be configured to receive the data from the passive position detecting apparatus 46 and compare the data to a known position reference to determine the turbine blade deflection as will be described in greater detail below.

As indicated above, the passive position detecting apparatus 46 may be configured to acquire data relating directly to the position of a turbine blade 22. Thus, the data acquired by the passive position detecting apparatus 46 need not be correlated to determine turbine blade deflection, as is necessary with an external sensor that indirectly determines blade deflection by measuring turbine blade operation conditions (e.g. blade strain or acceleration of the blade 22). Moreover, as a passive device, the passive position detecting apparatus 46 can acquire data relating to the position of a turbine blade 22 without transmitting a signal, such as a radar beam or light source, in order to obtain a measurement. Thus, it should be readily appreciated that the passive position detecting apparatus 46 may be any apparatus or device capable of acquiring data relating directly to the position of a turbine blade 22 without the necessity of transmitting or emitting a signal.

In one embodiment, illustrated in Fig. 2, the passive position detecting apparatus 46 may comprise at least one satellite positioning device. As shown, a single satellite positioning device is located on the tip of one of the turbine blades 22. However, it should be appreciated that any number of satellite positioning devices may be used in the present system. For example, a satellite positioning device may be located on each of the turbine blades 22 of a wind turbine 10.

As is generally understood by those of ordinary skill in the art, a satellite positioning device, such as a Global Positioning System (GPS) receiver, may be configured to receive position transmissions from available satellites in order to acquire its own three dimensional coordinates. The accuracy of such a position acquisition may, of course, vary depending on the type of satellite positioning device used. However, satellite positioning devices are generally known that can provide relatively high accuracy levels. For example, a commercially available GPS receiver, the AGGPS 332, from TRIMBLE (Sunnyvale, California) has an accuracy level of +/- one centimeter.

Thus, in the illustrated embodiment, the satellite positioning device may be configured to receive position transmissions from various satellites in order to acquire a three dimensional position measurement of the tip of a turbine blade 22. As such, the satellite positioning device may continuously acquire data relating directly to the position of a turbine blade 22 as the blade 22 rotates during operation of the turbine 10. This data can then be transmitted to the turbine controller 36. It should be appreciated that the position data may be transmitted from the satellite positioning device to the controller 36 by any suitable means. For example, the data may be transmitted by a wire connected to the controller 36, by a radio-frequency identification (RFID) tag or by any other wireless device.

The controller 36 may be pre-programmed with a known position reference for comparison to the position data transmitted by the satellite positioning device. For example, the controller 36 may be pre-programmed with the known coordinates of the wind turbine 10, such as the fixed three dimensional position of the centerline of the tower 12. As such, the controller 36 can be configured to compare the known coordinates of the tower 12 to the coordinates transmitted from the satellite positioning device to calculate the position of the blade 36 with respect to the tower 12 and, thus, determine turbine blade deflection.

Referring to Fig. 3, another embodiment of a system for monitoring and controlling the blade deflection of turbine blades 22 of a wind turbine 10 is illustrated. In this embodiment, the passive position detecting apparatus 46 may comprise a camera configured to capture or acquire images relating directly to the position of at least one of the turbine blades 22. As shown, the camera is mounted to the bottom of the nacelle 16 such that the field of view of the camera is directed towards the location at which the blades 22 pass the tower 12. However, the camera may be disposed at any location at which the position of the blades 22 with respect to the tower 12 can be captured in the camera's field of view. Additionally, it should be appreciated that the field of view of the camera may be adapted such that the camera always captures an image of the turbine blades 22 as they pass the tower 12, even when the turbine blades 22 are in a non-deflected state. Alternatively, the field of view may be set such that the turbine blades 22 only enter the camera's field of view when in a deflected position.

It should also be appreciated that any type of camera may be utilized with the present system. For example, the camera may be a video camera so that images are continuously acquired. Conversely, the camera may be a single shot camera. In such an embodiment, the camera may be coupled to a motion sensor to enable the camera to capture an image of a turbine blade 22 as the blade 22 passes the tower I2.

Moreover, to ensure that the images acquired by the camera may be accurately analyzed, the camera may be equipped with autofocus, may have high resolution (e.g. at least ten times the field of view) and may include a front light system coupled to a diffuser. In addition, as wind turbines 10 must operate during various operating conditions, the camera may be weather proof and may include a backlight system 48. For example, the backlight system 48 of the camera may comprise a strobe command and may be coupled to a motion sensor to enhance images acquired during nighttime or fog operation. Further, the camera may include other features generally known in the art to allow the camera to function during times of low level lighting or at night. It may also be desirable to include markings, such as reflective tape or certain colored paints, on the turbine blades 22 to improve pixel count dimension correlation and on the support system 14 and the tower 12 to achieve high contrast resolution.

During operation of the wind turbine 10, the camera may be configured to capture or acquire imagery data relating directly to the position of one or more of the turbine blades 22 in reference to a portion of the support system 14 or the tower 12 and transmit these images to the controller 36. As indicated above, data may be transmitted to the controller 36 by any suitable means, such as a wire connected to the controller 36.

The controller 36 may then be configured to receive the imagery data transmitted from the camera and compare the data to a known position reference in order to determine turbine blade deflection. To assist in making such a comparison, the controller 36 may be configured to run image analysis software. For example, the software may allow the controller 36 to determine blade deflection by tracking the location of a turbine blade 22 in reference to a platform 50 of the support system 14 and relative to the camera's field of the view. In such an embodiment, the width of the platform 50 within the camera's field of view may represent the known position reference. Alternatively, the software may be set-up so that blade deflection may be determined by comparing the transmitted imagery data to a reference image in which the position of the tower 12 and the turbine blade 22, as well the distance therebetween, is known. It should be appreciated that various imaging software packages are commercially available and may be used with the present system. An example of a suitable software package includes NI VISION DEVELOPMENT MODULE distributed by NATIONAL INSTRUMENTS (Austin, Texas).

In addition to being configured to determine turbine blade deflection, the controller 36 may also be configured to perform a corrective action in order to reduce or stop blade deflection. For example, the controller 36 may be configured to perform a corrective action preventatively, such as by making a one-time parameter change, in anticipation of operating conditions that may present an increased likelihood of a tower strike. Alternatively, the controller 36 may be configured to perform a corrective action reactively in response to blade deflection of one or more of the turbine blades 22 that exceeds a predetermined blade deflection threshold. Regardless, the corrective action may allow a wind turbine 10 to be adaptable to varying operating conditions which may otherwise result in significant aerodynamic loading on the turbine blades 22. Thus, the controller 36 may be configured to perform a corrective action to safeguard against the risk of tower strikes due to excessive turbine blade deflection.

The extent or magnitude of blade deflection required for the controller 36 to perform a corrective action reactively may vary from wind turbine to wind turbine. For example, the predetermined blade deflection threshold may depend on the operating conditions of the wind turbine 10, the thickness of the turbine blades 22, the length of the turbine blades 22 and numerous other factors. In one embodiment, the predetermined blade deflection threshold of a turbine blade 22 may be equal to 70% of the non-deflected blade clearance 42 (Figs. 2 and 3). In the event that the controller 36 determines that the turbine blade deflection has exceeded this threshold, it can perform a corrective action to safeguard against a tower strike.

The corrective action performed by the controller 36 can take many forms. For example, the corrective action may include altering the blade pitch of one or more blades 22 for a partial or full revolution of the rotor 18. As indicated above, this may be accomplished by controlling a pitch adjustment system 32. Generally, altering the blade pitch of a turbine blade 22 reduces blade deflection by increasing out-of-plane stiffness.

In another embodiment, the corrective action may comprise modifying the blade loading on the wind turbine 10 by increasing the torque demand on the electrical generator (not illustrated) positioned within the nacelle 16. This reduces the rotational speed of the turbine blades 22, thereby potentially reducing the aerodynamic loads acting upon the surfaces of the blades 22.

Alternatively, the corrective action may include yawing the nacelle 16 to change the angle of the nacelle 16 relative to the direction 28 (Fig. 1) of the wind. A yaw drive mechanism 40 is typically used to change the angle of the nacelle 16 so that the turbine blades 22 are properly angled with respect to the prevailing wind. For example, pointing the leading edge of a turbine blade 22 upwind can reduce loading on the blade 22 as it passes the tower 12.

It should be readily appreciated, however, that the controller 36 need not perform one of the corrective actions described above and may generally perform any corrective action designed to reduce blade deflection. Additionally, the controller 36 may be configured to perform multiple corrective actions simultaneously, which may include one or more of the corrective actions described above.

Furthermore, the controller 36 may be configured to perform a particular corrective action in response to certain operating conditions and/or operating states of the wind turbine 10. Thus, in one embodiment, the controller 36 may be configured to selectively perform a particular corrective action depending upon the magnitude of the blade deflection of the turbine blades 22. For example, during certain wind conditions, turbine blade deflection may be most effectively reduced by altering the blade pitch of the turbine blades 22. Accordingly, during such conditions, the controller 36 may be configured to alter the blade pitch of one or more of the turbine blades 22 when the determined blade deflection exceeds a predetermined level, such as a predetermined percentage of the non-deflected blade clearance. However, in the event that blade deflection is below this predetermined level, it may be desirable for the controller to perform a different corrective action. This may be desirable, for example, when an alternative corrective action can sufficiently reduce blade deflection while causing less of an impact on the amount of power generated by the wind turbine 10. Accordingly, such a configuration can improve the efficiency of a wind turbine 10 by ensuring that the corrective action performed is proportional to the severity of the blade deflection.

It should also be appreciated that the system described above may be installed in a plurality of wind turbines located within close proximity to each other, for example in a wind park. In such an embodiment, each wind turbine 10 may comprise a passive position detecting apparatus 46 and a turbine controller 36. Additionally, referring to Figs. 2 and 3, the controller 36 of each wind turbine 10 may be in communication with a park controller 44. It should be appreciated that the controller 36 may be in communication with the park controller 44 by any suitable means. For example, transmission lines (not illustrated) may be used to connect the controller 36 to the park controller 44.

The park controller 44 may be generally configured to issue a control command to override the control of any or all of the turbine controllers 36 in a wind park in order to change or alter the operating mode of any number of the wind turbines. Specifically, the park controller 44 may be configured to command a single wind turbine 10, particular groups of wind turbines, or all of the wind turbines in a wind park to enter into a particular operating mode in order to adapt the wind turbine(s) to changing operating conditions. In other words, the park controller 44 may alter operating modes of the wind turbine(s) to react proactively to new operating conditions (e.g. excessive wind deviations) to achieve maximum power generation while safeguarding the turbines.

In one embodiment, the park controller 44 may be configured such that a user may manually enter a new operating mode for one or more wind turbines according to observed or anticipated operating conditions. Alternatively, the park controller 44 may be configured to change the operating mode of one or more wind turbines automatically. For example, the turbine controller 36 in each wind turbine 10 may be configured to transmit a notification to the park controller 44 whenever a corrective action is performed due to excessive turbine blade deflection. In response, the park controller 44 can be configured to issue a control command instructing any number of wind turbines to perform the same corrective action. For instance, since operating conditions across a wind park may vary significantly due to wind deviations, it may be desirable to command only a small group of wind turbines, located adjacent to the wind turbine 10 initially performing the corrective action, to perform a similar corrective action. Accordingly, the park controller 44 can provide an overlaying safeguard to prevent tower strikes.

It should also be appreciated that the present subject matter encompasses a methodology for monitoring and controlling the blade deflection of turbine blades 22 of a wind turbine 10. The method includes the steps of passively acquiring data relating directly to a position of at least one turbine blade 22 of a wind turbine 10, transmitting the data to a controller 36, comparing the data to a known position reference to determine turbine blade deflection, and performing a corrective action in order to avoid excessive blade deflection.

It should be further appreciated that the present subject matter also encompasses a wind turbine. The wind turbine 10 includes a tower 12 and a nacelle 16 mounted atop the tower 12. The wind turbine 10 also includes a rotor 18 coupled to the nacelle that comprises a hub 20 and at least one turbine blade 22 extending outwardly from the hub 20. Finally, the wind turbine includes a passive position detecting apparatus 46 and a controller 36, both of which may be configured, adapted or designed as described herein.

This written description uses examples to disclose the present subject matter, including the preferred mode, and also to enable any person skilled in the art to practice the present subject matter, including making and using any devices or systems and performing any incorporated methods. The patentable scope of the present subject matter is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A system for monitoring and controlling the deflection of turbine blades of a wind turbine, the system comprising:
   a passive position detecting apparatus disposed on a wind turbine, wherein said passive position detecting apparatus is configured to acquire and transmit data relating directly to a position of at least one of a plurality turbine blades of said wind turbine; and
   a controller configured to receive said data from said passive position detecting apparatus and compare said data to a known position reference to determine turbine blade deflection.
2. The system of clause 1, wherein said passive position detecting apparatus comprises at least one satellite positioning device.
3. The system of any preceding clause, wherein said at least one satellite positioning device is disposed on a tip of at least one of said plurality of turbine blades.
4. The system of any preceding clause, wherein said passive position detecting apparatus comprises at least one camera.
5. The system of any preceding clause, wherein said controller is configured to run image analysis software to compare said data to said known position reference to determine blade deflection.
6. The system of any preceding clause, wherein said at least one camera is disposed on a nacelle of said wind turbine and comprises a backlight system.
7. The system of any preceding clause, wherein said controller is further configured to perform a corrective action when said turbine blade deflection exceeds a predetermined blade deflection threshold.
8. The system of any preceding clause, wherein said corrective action comprises altering the blade pitch of at least one of said plurality of turbine blades.
9. The system of any preceding clause, wherein said corrective action comprises modifying the blade loading on said wind turbine.
10. The system of any preceding clause, wherein said corrective action comprises yawing a nacelle of said wind turbine.
11. A method for monitoring and controlling the deflection of turbine blades of a wind turbine, the method comprising:
   passively acquiring data relating directly to a position of at least one of a plurality of turbine blades of a wind turbine;
   transmitting said data to a controller;
   comparing said data to a known position reference to determine turbine blade deflection; and
   performing a corrective action when said turbine blade deflection exceeds a predetermined blade deflection threshold.
12. The method of any preceding clause, wherein said data is passively acquired by at least one satellite positioning device or at least one camera.
13. The method of any preceding clause, wherein said corrective action comprises altering the blade pitch of at least one of said plurality of turbine blades.
14. The method of any preceding clause, wherein said corrective action comprises modifying the blade loading on said wind turbine.
15. The method of any preceding clause, wherein said corrective action comprises yawing a nacelle of said wind turbine.
16. The method of any preceding clause, further comprising transmitting notification of said corrective action to a park controller, wherein said park controller is configured to control a plurality of wind turbines.
17. The method of any preceding clause, further comprising issuing a control command from said park controller to any number of said plurality of wind turbines, wherein said control command instructs said any number of said plurality of wind turbines to perform said corrective action.
18. A wind turbine, comprising:
   a tower;
   a nacelle mounted atop said tower;
   a rotor coupled to said nacelle, said rotor comprising a hub and at least one turbine blade extending outwardly from said hub;
   a passive position detecting apparatus configured to acquire and transmit data relating directly to a position of said at least one turbine blade; and
   a controller configured to receive said data from said passive position detecting apparatus and compare said data to a known position reference to determine turbine blade deflection.
19. The wind turbine of any preceding clause, wherein said passive position detecting apparatus comprises at least one satellite positioning device, wherein said at least one satellite positioning device is disposed on a tip of said at least one turbine blade.
20. The wind turbine of any preceding clause, wherein said passive position detecting apparatus comprises at least one camera, wherein said at least one camera is disposed on said nacelle.

## Claims

1. A system for monitoring and controlling the deflection of turbine blades (22) of a wind turbine (10), the system comprising:
passive position detecting apparatus (46) disposed on a wind turbine (10), wherein said passive position detecting apparatus (46) is configured to acquire and transmit data relating directly to a position of at least one of a plurality turbine blades (22) of said wind turbine (10); and
controller (36) configured to receive said data from said passive position detecting apparatus (46) and compare said data to a known position reference to determine turbine blade deflection.

2. The system of Claim 1, wherein said passive position detecting apparatus (46) comprises at least one satellite positioning device.

3. The system of any preceding claim, wherein said passive position detecting apparatus (46) comprises at least one camera.

4. The system of any preceding Claim, wherein said controller (36) is configured to run image analysis software to compare said data to said known position reference to determine blade deflection.

5. The system as in any preceding claim, wherein said controller (36) is further configured to perform a corrective action when said turbine blade deflection exceeds a predetermined blade deflection threshold.

6. A method for monitoring and controlling the deflection of turbine blades (22) of a wind turbine (10), the method comprising:
passively acquiring data relating directly to a position of at least one of a plurality of turbine blades (22) of a wind turbine (10);
transmitting said data to a controller (46);
comparing said data to a known position reference to determine turbine blade deflection; and
performing a corrective action when said turbine blade deflection exceeds a predetermined blade deflection threshold.

7. The method of Claim 6, wherein said data is passively acquired by at least one satellite positioning device or at least one camera.

8. The method as in Claim 6 or Claim 7, wherein said corrective action comprises altering the blade pitch of at least one of said plurality of turbine blades (22).

9. The method as in any of Claims 6 to 8, wherein said corrective action comprises modifying the blade loading on said wind turbine (10).

10. The method as in any of Claims 6 to 9, wherein said corrective action comprises yawing a nacelle (16) of said wind turbine (10).
